# EUROPÄISCHE PATENTSCHRIFT

(11) **EP 2 494 162 B1**
(45) Veröffentlichungstag und Bekanntmachung des Hinweises auf die Patenterteilung: **14.08.2013**
(21) Anmeldenummer: 10770992.5
(22) Anmeldetag: 02.10.2010
(51) Int. Cl.: F02B 29/00, F02B 29/04, B60K 6/00, F01P 7/16, B60K 6/20

(54) **ANTRIEB FÜR EIN HYBRIDFAHRZEUG**
POWER TRAIN FOR HYBRID VEHICLE
ENTRAÎNEMENT POUR UN VÉHICULE HYBRIDE

(30) Priorität: 30.10.2009 DE 102009051377
(43) Veröffentlichungstag der Anmeldung: 05.09.2012
(73) Patentinhaber: Bayerische Motoren Werke Aktiengesellschaft, 80809 München (DE)
(72) Erfinder: DANZER, Andreas, 85445 Oberding (DE)
(86) Internationale Anmeldenummer: PCT/EP2010/006026
(87) Internationale Veröffentlichungsnummer: WO 2011/050892

(56) Entgegenhaltungen:
- EP-A2- 1 059 432
- EP-A2- 1 111 214
- US-A1- 2002 073 726
- US-A1- 2009 020 081

## Beschreibung

Die Erfindung betrifft einen Antrieb für ein Hybndfahrzeug.

Hybridfahrzeuge sind sowohl mit einem Verbrennungsmotor als auch mit einer elektrischen Antriebseinheit ausgestattet, wobei die elektrische Antriebseinheit in vielen Fällen motorisch oder generatorisch betrieben werden kann. Die elektrische Antriebseinheit umfasst dabei eine Leistungselektronik, deren Verlustleistung in Form von Wärme abgeführt werden muss. Hierzu ist es erforderlich, die Elektronik in einen Kühlkreislauf einzubinden.

Häufig liegen die maximal zulässigen Temperaturen des Kühlmediums für die Elektronik unter dem Niveau der im Motorkreislauf vorherrschenden Temperaturen, sodass eine einfache Einbindung der Leistungselektronik in diesen Hochtemperatur-Kühlkreislauf nicht möglich ist.

Stattdessen kann beispielsweise ein eigener Kühlkreislauf vorgesehen werden. In diesem Fall muss der benötigte Kühlmediumkühler so ausgelegt sein, dass er alle kritischen Betriebspunkte abdeckt Als besonders kritisch hat sich hierbei der Stillstand oder eine sehr langsame Fahrt des Fahrzeugs herausgestellt, da die elektrischen Verbraucher zwar eine hohe Verlustleistung produzieren, gleichzeitig aber nur ein geringer Kühlluft-Volumenstrom über den Kühlmediumkühler zur Verfügung steht. Aufgrund dieses kntischen Betriebspunkts muss der Kühlmediumkühler relativ groß ausgeführt werden, obwohl er damit für die meisten anderen Betnebspunkte überdimensioniert ist. Dementsprechend ist der Kühlmediumkühler in einem separaten Elektronik-Kühlkreis unerwünscht groß, schwer und teuer.

Aus der DE 10 2005 047 653 A1 ist bereits eine Hybndantriebseinheit für ein Kraftfahrzeug bekannt, bei der ein Niedertemperatur-Kühlkreis vorgesehen ist, der einen Ladeluftkühler sowie eine elektrische Maschine und/oder der elektrischen Maschine zugeordnete elektronische Bauelemente einschließt Durch die Einbindung des Ladeluftkühlers zur Kühlung der Verbrennungsluft und der elektrischen Maschine zur Kühlung der Leistungselektronik in einen gemeinsamen Niedertemperatur-Kühlkreis lassen sich erhebliche Gewichts-, Bauraum- und Kostenvorteile erzielen. Im Übrigen sind die Anforderungen der Leistungselektronik und des Ladeluftkühlers so verschieden, dass beispielsweise an dem oben erwähnten, für die Leistungselektronik besonders kritischen Betriebspunkt (Fahrzeugstillstand oder Langsamfahrt) nur wenig Kühlleistung vom Ladeluftkühler abgerufen wird und somit nahezu die gesamte Kühlkapazität für die Leistungselektronik zur Verfügung steht.

Bei einem gemeinsamen Kühlkreis ist es jedoch schwierig, die zu kühlende Elektronik unterhalb eines vorgegebenen Grenzwerts auf einem weitgehend konstanten Temperaturniveau zu halten. Für die elektronischen Bauteile ist ein möglichst konstantes Temperaturniveau allerdings von großer Bedeutung, da sich Temperaturschwankungen negativ auf deren Lebensdauer auswirken können.

Die EP 1 059 432 A2 offenbart eine Kühlvorrichtung für einen Fahrzeugmotor, welche die von einem elektromotorischen Fahrzeugantrieb sowie einem Turbolader erzeugte Wärme über einen Kühlmittelkühler abführen kann. Der Turbolader mit einer zugeordneten ersten Pumpe und der elektromotorische Fahrzeugantrieb mit einer zugeordneten zweiten Pumpe sind in einem Kühlkreislauf parallel geschaltet. Nach dem Abstellen des Elektroantriebs und/oder eines Fahrzeug-Verbrennungsmotors ist eine Kühlung des Turboladers weiterhin möglich, indem die erste Pumpe noch über eine vorbestimmte Zeitspanne betrieben wird. Auf diese Weise kann nach dem Abstellen des Elektroantriebs und/oder des Verbrennungsmotors ein unerwünschter Temperaturanstieg im Turbolader verhindert und somit dessen Lebensdauer verlängert werden.

Ferner ist in der US 2009/0020081 A1 ein integriertes Hoch- und Moderattemperatur-Kühlsystem für Fahrzeuge beschrieben, welches unterschiedliche Kühlleistungsniveaus bereitstellt und damit sowohl zum Kühlen des Verbrennungsmotors (einschließlich des Getriebes) als auch zum Kühlen von Nebenaggregatkomponenten des Fahrzeugs verwendet werden kann. Die Realisierung der unterschiedlichen Kühlleistungsniveaus erfolgt dabei insbesondere durch einen speziell konstruierten Kühlmittelkühler, der ein für das gesamte Kühlsystem verwendetes, gemeinsames Kühlmittel "temperaturgeschichtet" bereitstellt.

Aufgabe der Erfindung ist die Schaffung eines Antriebs für ein Hybridfahrzeug, bei dem sich die Leistungselektronik mit geringem Aufwand kühlen und auf einem weitgehend konstanten Temperaturniveau halten lässt.

Erfindungsgemäß wird diese Aufgabe gelöst durch einen Antrieb für ein Hybridfahrzeug, mit einem Verbrennungsmotor, einem Ladeluftkühler zur Kühlung einer dem Verbrennungsmotor zugeführten Verbrennungsluft, einem Kühlmediumkühler zur Kühlung eines für den Ladeluftkühler verwendeten ersten Kühlmediums, einer ersten Pumpe zum Umwälzen des ersten Kühlmediums in einem den Ladeluftkühler und den Kühlmediumkühler umfassenden Ladeluft-Kühlkreislauf, einer elektrischen Antriebseinheit sowie einer zweiten Pumpe zum Umwälzen eines zweiten Kühlmedlums in einem die elektrische Antriebseinheit umfassenden Elektronik-Kühlkreislauf, wobei der Ladeluft-Kühlkreislauf und der Elektronik-Kühlkreislauf thermisch gekoppelt sind. Infolge dieser thermischen Kopplung wird lediglich ein einziger Kühlmediumkühler benötigt, was sich positiv auf das Gesamtgewicht, den benötigten Bauraum und die Kosten auswirkt. Die beiden Kühikreistaufe sind dabei zwar thermisch gekoppelt, lassen sich aber im übrigen durch jeweils eine eigene Pumpe weitgehend unabhängig voneinander ansteuern. Das Erfordernis einer möglichst konstanten Kühtfemperatur der Leinstungselektronik lasst sich somit auf einfache und vorteilhafte Art und Weise realisieren.

Die zweite Pumpe weist im Betrieb ein weitgehend konstantes Fördervolumen auf, welches eine vorgegebene Volumenstrommindestanforderung im Elektronik-Kühlkreislauf erfüllt. Durch diese steuerungstechnisch und/oder konstruktiv vereinfachte Ausführung der zweiten Pumpe lassen sich die Gesamtkosten des Antriebs weiter reduzieren.

Hingegen weist die erste Pumpe eine variable Pumpleistung auf, wobei diese Pumpleistung von Anforderungen im Ladeluft-Kühlkreislauf und von Anforderungen im Elektronik-Kühlkreislauf abhängig ist.

Diese Pumpleistung der ersten Pumpe kann zusätzlich auch von Umgebungsbedingungen, insbesondere der Umgebungstemperatur abhängig sein. Damit kann über die gezielte Ansteuerung der ersten Pumpe auf spezielle Anforderungen und Umgebungsbedingungen eingegangen werden, ohne dass der Volumenstrom im Elektronik-Kühlkreislauf beeinflusst wird.

In einer Ausführungsvariante steht der Elektronik-Kühlkreislauf mit dem Ladeluft-Kühlkreislauf in Fluidverbindung, und das erste Kühlmedium ist mit dem zweiten Kühlmedium identisch. Die thermische Kopplung der Kreisläufe ist in diesem Fall also durch einen Stoffaustausch realisiert.

In dieser Ausführungsvariante weisen der Elektronik-Kühlkreislauf und der Ladeluft-Kühlkreistauf bevorzugt einen gemeinsamen Ausgleichsbehälter auf, in dem sich das erste Kohlmedium und das zweite Kühlmedium vermischen.

In einer anderen Ausführungsvariante des Antriebs ist das erste Kühlmedium vom zweiten Kühlmedium getrennt, und die Kühlkreisläufe sind über einen Wärmetauscher thermisch gekoppelt. Hier ist die Wärmeübertragung oder thermische Kopplung somit ohne Stoffaustausch realisiert.

Weitere zweckmäßige Ausgestaltungeen der Erfindung und deren Vorteile ergeben sich aus den Unteransprüchen.

Die Erfindüng wird nachfolgend anhand bevorzugter Ausfuhrungsformen beschrieben, die in den beigefügten Zeichnungen dargestellt sind in diesen zeigt.
- Figur 1 einen schematisch skizzierten, erfindungsgemäßen Antrieb gemäß einer ersten Ausführungsform;
- Figur 2 einen schematisch skizzierten, erfindungsgemäßen Antrieb gemäß einer zweiten Ausführungsform,
- Figur 3 einen schematisch skizzierten, erfindungsgemäßen Antrieb gemäß einer dritten Ausführungsform, und
- Figur 4 eine beispielhafte Darstellung von Kühlkreisläufen für den Antrieb gemäß Figur 1

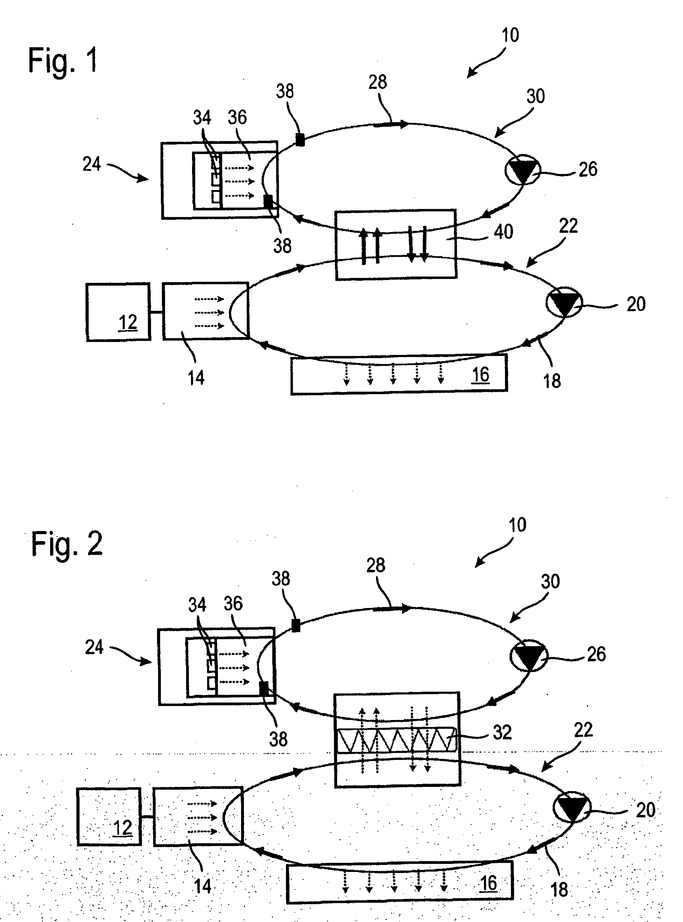

Die Figuren 1 und 2 zeigen einen schematischen Ausschnitt eines Antriebs 10 für ein Hybridfahrzeug mit indirekter Ladeluftkühlung Der Antrieb 10 umfasst einen Verbrennungsmotor 12, einen Ladeluftkühler 14 zur Kühlung einer dem Verbrennungsmotor 12 zugeführten Verbrennungsluft, einen Kühlmediumkühler 16 zur Kühlung eines für den Ladeluftkühler 14 verwendeten ersten Kühlmediums 18, eine erste Pumpe 20 zur Umwälzen des ersten Kühlmediums 18 in einem den Ladeluftkühler 14 und den Kühlmediumkühler 16 umfassenden Ladeluft-Kühlkreislauf 22, einer elektrischen Antriebseinheit 24, sowie einer zweiten Pumpe 26 zum Umwälzen eines zweiten Kühlmediums 28 in einem die elektrische Antriebseinheit 24 umfassenden Elektronik-Kühlkreislauf 30, wobei der Ladeluft-Kühlkreislauf 22 und der Elektronik-Kühlkreislauf 30 thermisch gekoppelt sind Gestrichelte Pfeile in Figur 2 symbolisieren eine Wärmeübertragung ohne Stoffaustausch zwischen den Kreisläufen 22, 30, wohingegen in Figur 1 eine Wärmeübertragung mit Stoffaustausch mit durchgezogenen Pfeilen dargestellt ist

In einer ersten Ausführungsform des Antriebs 10 gemäß Figur 1 ist die thermische Kopplung durch einen Stoffaustausch zwischen den Kühlkreisläufen 22, 30 realisiert Dies bedeutet, dass der Elektronik-Kühlkreislauf 30 mit dem Ladeluft-Kühlkreislauf 22 in Fluidverbindung steht und das erste Kühlmedium 18 mit dem zweiten Kühlmedium 28 identisch ist Als gemeinsames Kühlmedium können dabei sowohl flüssige als-auch gasförmige Medien verwendet werden. Vorzugsweise ist das gemeinsame Kühlmedium 18, 28 flüssig, besonders bevorzugt eine Wasser/Kühlmittel-Mischung, bei der das Kühlmittel z.B. auf Glykol-Basis hergestellt ist. Alternativ wären auch Wasser oder Öle als flüssige Kühlmedien geeignet

Eine zweite Ausführungsform des Antriebs 10 gemäß Figur 2 unterscheidet sich lediglich dadurch von der ersten Ausführungsgemäß gemäß Figur 1, dass die thermische Kopplung der Kühlkreisläufe 22, 30 hier ohne Stoffaustausch realisiert ist. Dies bedeutet, dass das erste Kühlmedium 18 und das zweite Kühlmedium 28 getrennt und die Kühlkreisläufe 22, 30 über einen herkömmlichen Wärmetauscher 32 thermisch gekoppelt sind

Demzufolge ist es möglich, für die beiden Kühlkreisläufe 22, 30 unterschiedliche Kühlmedium 18, 28 zu verwenden Insbesondere sind aber auch in dieser zweiten Ausführungsform sowohl das erste Kühlmedium 18 als auch das zweite Kühlmedium 28 flüssig, besonders bevorzugt ein Wasser/Kühlmittel-Gemisch. Alternativ können aber auch hier für das erste Kühlmedium 18 und/oder das zweite Kühlmedium 28 gasförmige Medien oder andere Flüssigkeiten wie Wasser oder Öl zum Einsatz kommen.

Aufgrund der thermischen Kopplung der beiden Kühlkreisläufe 22, 30 reicht der Kuhlmediumkühler 16 im Ladeluft-Kühlkreislauf 22 aus, um sowohl den Ladeluftkühler 14 im Ladeluft-Kühlkreislauf 22 als auch (über den Wärmetauscher 32 oder ein gemeinsames Kühlmedium 18, 28) die elektrische Antriebseinheit 24 im Elektronik-Kühlkreislauf 30 zu kühlen Gleichzeitig lassen sich die beiden Kühlkreisläufe 22, 30 über ihre jeweilige Pumpe 20, 26 trotzdem individuell und bedarfsgerecht auf bestimmte Kühlanforderungen einstellen.

Die elektrische Antriebseinheit 24 umfasst Elektronikkomponenten 34 sowie zu deren Kühlung einen Kühlkörper 36, der an den Elektronik-Kühlkreislauf 30 angeschlossen ist. Die Elektronikkomponenten 34 umfassen dabei insbesondere die Leistungselektronik der elektrischen Antriebseinheit 24, unter Umständen aber auch Temperatursensoren 38 oder Energiespeicher wie Akkus oder Battenen

Der Kühlmedium-Volumenstrom im Elektronik-Kühlkreislauf -30 ist in der Regel Mindestanforderungen unterworfen, um eine kontinuierliche Entwärmung der Elektronikkomponenten 34 zu gewährleisten und ein Auftreten lokaler "Hot-Spots" zu vermeiden. Wenn überhaupt, lässt sich der Volumenstrom im Elektronik-Kühlkreislauf 30 also nur in engen Grenzen variieren. Folglich wird in einer besonders kostengünstigen Ausführungsvariante des Antriebs 10 als zweite Pumpe 26 eine hinsichtlich ihrer Ansteuermöglichkeiten stark vereinfachte Kühlmediumpumpe eingesetzt Im einfachsten Fall hat die zweite Pumpe 26 lediglich eine "Ein/Aus-Funktion" und weist im Betrieb ein weitgehend konstantes Fördervolumen auf, welches die von der elektrischen Antriebseinheit 24 vorgegebene Volumenstrommindestanforderung im Elektronik-Kühlkreislauf 30 erfüllt Für den Fall, dass die Viskosität des zweiten Kühlmediums 28 bei den auftretenden Temperaturen stark schwankt, muss die Leistung der zweiten Pumpe 26 gegebenenfalls in mehreren, insbesondere in zwei oder drei Stufen veränderbar sein, um temperaturabhängig einen hinreichenden, weitgehend konstanten Volumenstrom bereitstellen zu können

Die erste Pumpe 20 weist hingegen eine variabel einstellbare Pumpleistung auf, wobei diese Pumpleistung von Anforderungen im Ladeluft-Kühlkreislauf 22 und von Anforderungen im Elektronik-Kühlkreislauf 30 abhängig ist Zusätzlich können beim Einstellen der Pumpleistung auch Umgebungsbedingungen, insbesondere die Umgebungstemperatur berücksichtigt werden.

Da Temperaturschwankungen die Lebensdauer der Elektronik beeinträchtigen, ist eine Steuerung oder Regelung der Kühlkreisläufe 22, 30 anzustreben, bei der das Temperaturniveau der Elektronikkomponenten 34 im wesentlichen konstant bleibt bzw. die Temperaturschwankungen innerhalb vorgegebener Grenzwerte liegen.

Da der Volumenstrom im Elektronik-Kühlkreislauf 30 weitgehend konstant ist, lässt sich die Kühlung der Elektronikkomponenten 34 nur über die Temperatur des zweiten Kühlmediums 28 einstellen. Die Temperatur dieses zweiten Kühlmediums 28 hängt infolge der thermischen Kopplung der Kühlkreisläufe 22, 30 von der Temperatur des ersten Kühlmediums 18 und diese wiederum vom Volumenstrom im Ladeluft-Kühlkreislauf 22 ab. Um eine gewünschte Temperatur des ersten Kühlmediums 18 zu erhalten, ist bei der Bestimmung des Volumenstroms im Ladeluft-Kühlkreislauf 22 zusätzlich der Wärmeeintrag durch den Ladeluftkühler 14 zu berücksichtigen. Da die Kühlleistung des Kühlmediumkühlers 16 zusätzlich von der Umgebungstemperatur beeinflusst wird, ist auch diese idealerweise bei der Ansteuerung der ersten Pumpe 20 zu berücksichtigen.

Um die erste Pumpe 20 abhängig von den Anforderungen der elektrischen Antriebseinheit 24 ansteuern zu können, ist zumindest im Elektronik-Kühlkreislauf 30 ein Temperatursensor 38 vorgesehen Häufig kann ein Temperatursensor 38 verwendet werden, der bereits standardmäßig als Elektronikkomponente 34 in der elektrischen Antnebseinheit 24 vorhanden ist Alternativ kann der Temperatursensor 38 aber auch außerhalb der elektrischen Antriebseinheit 24 im Elektronik-Kühlkreislauf 30 angeordnet sein (vgl Figuren 1 und 2).

Die Verwendung eines einzigen Temperatursensors 38 im Elektronik-Kühlkreislauf 30 ist für eine vorteilhafte Ansteuerung der ersten Pumpe 20 als Minimalanforderung anzusehen. Selbstverstandlich können aus Gründen der Redundanz oder der höheren Genauigkeit weitere Temperatursensoren 38 im Elektronik-Kühlkreislauf 30 und/oder im Ladeluft-Kühlkreislauf 22 vorgesehen sein. Durch eine geeignete Einstellung der zweiten Pumpe 26 sowie eine geeignete Ansteuerung der ersten Pumpe 20 kann jedoch üblicherweise auf eine aufwendige und teure Regelung mittels eines Thermostaten verzichtet werden.

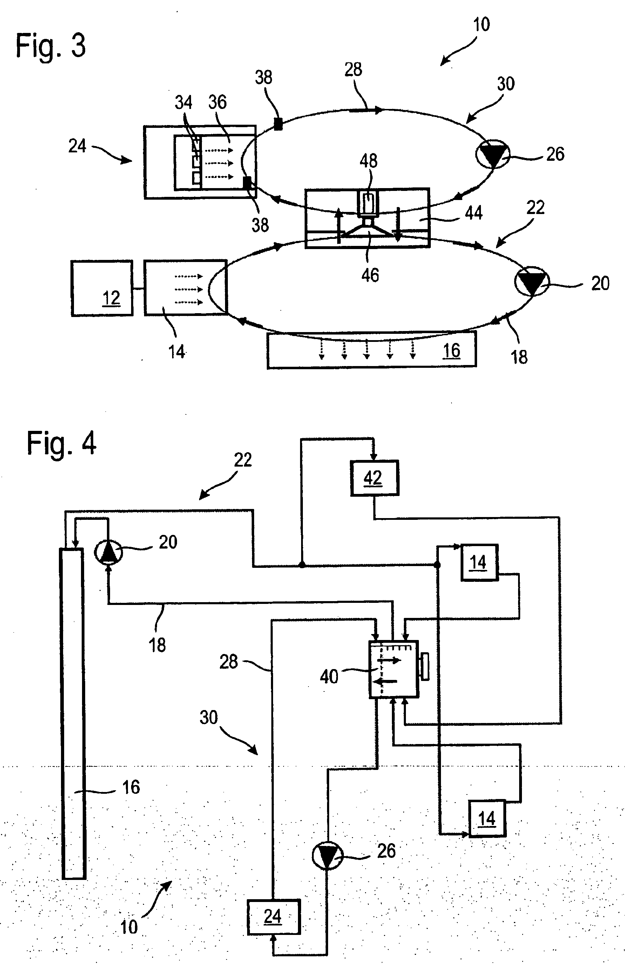

Im Gegensatz dazu ist in Figur 3 eine dritte Ausführungsform des Antnebs 10 dargestellt, bei der die Kopplung der Kühlkreisläufe 22, 30 analog zu Figur 1 mit Stoffaustausch realisiert ist, allerdings nicht über einen gemeinsamen Ausgleichsbehälter 42, sondern über ein Stellventil oder einen Thermostaten. Das Stellventil bzw. der Thermostat fungiert dabei als Mischeinrichtung 44 für den Stoffaustausch zwischen den beiden Kreisläufen 22, 30

Die Temperaturregelung für den Elektronik-Kühlkreislauf 30 wird auf diese Weise unabhängiger von der Regelung der ersten Pumpe 20 im Ladeluft-Kühlkreislauf 22 Deren Regelung ist nur noch für die Bereitstellung einer hinreichend niedrigen Temperatur im Ladeluft-Kühlkreislauf 22 notwendig. Die entsprechende Mischung für ein gewünschtes Temperaturergebnis im Elektronik-Kühlkreislauf 30 wird durch die Mischeinrichtung 44 übernommen Der Einsatz einer solchen Mischeinrichtung 44 ist zwar einerseits mit zusätzlichem Aufwand und zusätzlichen Kosten verbunden, ermöglicht andererseits im Vergleich zur ersten Ausführungsform gemäß Figur 1 im Elektronik-Kühlkreislauf 30 aber auch eine konstantere Temperaturregelung, welche deutlich unabhängiger von anderen Anforderungen im Ladeluft-Kühlkreislauf 22 ist.

Die Mischeinrichtung 44 ist beispielsweise ein Thermostat. Der Thermostat verfugt über einen Mischabschnitt 46, der über einen Thermostataktor 48 angesteuert wird. Der Thermostataktor 48 kann ein Wachselement sein, dessen Öffnungstemperatur auf die gewünschte Temperatur im Elektronik-Kühlkreislauf 30 ausgelegt ist. Weiterhin ist es möglich, das Wachselement nach dem Prinzip eines Kennfeldthermostaten mit einer Heizpatrone zu versehen. Damit lassen sich dann elektronisch angesteuert niedrigere Öffnungstemperaturen und damit Regeltemperaturen für den Elektronik-Kühlkreislauf 30 umsetzen als dies mit dem reinen Wachselement möglich wäre. Da das Wachselement eine Temperaturregelung vornimmt ist für die regelungstechnische Arbeit prinzipiell kein Temperatursensor 38 im Elektronik-Kühlkreislauf 30 erforderlich, wenngleich dies in Kombination mit einem Kennfeldthermostaten sinnvoll sein kann und für das Erkennen von zu hohen Temperaturen notwendig ist.

Wird das Wachselement im Thermostaten durch einen rein elektrisch angesteuerten Aktor ersetzt, ist die Mischeinrichtung 44 ein Stellventil. Um mit diesem Stellventil eine Temperaturregelung darzustellen, ist eine Temperaturmessung im Elektronik-Kühlkreislauf 30 als Ruckführgröße notwendig.

Die Figur 4 zeigt eine praxisnahe Ausführung der Kühlkreisläufe 22, 30 gemäß der ersten Ausführungsform des Antnebs 10 in Figur 1 Die beiden Kühlkreisläufe 22, 30 sind dabei über einen gemeinsamen Ausgleichsbehälter 40 thermisch gekoppelt, wobei sich in dem Ausgleichsbehälter 40 das erste Kühlmedium 18 und das (identische) zweite Kühlmedium 28 vermischen An den Ladeluft-Kühlkreislauf 22 sind in diesem Ausfuhrungsbeispiel zwei Ladeluftkühler 14 sowie zusätzlich ein Motorsteuergerät 42 des Verbrennungsmotors 12 angeschlossen

Der beschriebene, vorteilhafte Antrieb 10 für Hybridfahrzeuge weist somit zwei Niedertemperatur-Kühlkreisläufe 22, 30 mit maximalen Kühlmediumtemperaturen in der Größenordnung von etwa 60°C bis 80°C auf, wobei die Kühlkreisläufe 22, 30 lediglich einen einzigen Kühlmediumkühler 16 benötigen und gleichzeitig aufgrund der individuellen Ansteuermöglichkeiten ihrer separaten Pumpen 20, 26 äußerst präzise die speziellen Kühlungsanforderungen der elektrischen Antriebseinheit 24, insbesondere der Elektronikkomponenten 34 der elektrischen Antriebseinheit 24, erfüllen

## Patentansprüche

1. Antrieb für ein Hybridfahrzeug mit
einem Verbrennungsmotor (12),
einem Ladeluftkühler (14) zur Kühlung einer dem Verbrennungsmotor (12) zugeführten Verbrennungsluft,
einem Kühlmediumkühler (16) zur Kühlung eines für den Ladeluftkühler (14) verwendeten ersten Kühlmediums (18),
einer ersten Pumpe (20) zum Umwälzen des ersten Kühlmediums (18) in einem den Ladeluftkühler (14) und den Kühlmediumkühler (16) umfassenden Ladeluft-Kühlkreislauf (22),
einer elektrischen Antriebseinheit (24), sowie
einer zweiten Pumpe (26) zum Umwälzen eines zweiten Kühlmediums (28) in einem die elektrische Antriebseinheit (24) umfassenden Elektronik-Kühlkreislauf (30),
wobei der Ladeluft-Kühlkreislauf (22) und der Elektronik-Kühlkreislauf (30) thermisch gekoppelt sind, **dadurch gekennzeichnet,**
**dass** die erste Pumpe (20) eine variable Pumpleistung aufweist, welche von Anforderungen im Ladeluft-Kühlkreislauf (22) und von Anforderungen im Elektronik-Kühlkreislauf (30) abhängig ist, und
**dass** die zweite Pumpe (26) im Betrieb ein weitgehend konstantes Fördervolumen aufweist, welches eine vorgegebene Volumenstrommindestanforderung im Elektronik-Kühlkreislauf (30) erfüllt.

2. Antrieb nach Anspruch 1, **dadurch gekennzeichnet, dass** die Pumpleistung der ersten Pumpe (20) von den Umgebungsbedingungen abhängig ist.

3. Antrieb nach einem der vorhergehenden Ansprüche, **dadurch gekennzeichnet, dass** die elektrische Antriebseinheit (24) Elektronikkomponenten (34) sowie einen an den Elektronik-Kühlkreislauf (30) angeschlossenen Kühlkörper (36) zur Kühlung der Elektronikkomponenten (34) umfasst.

4. Antrieb nach einem der vorhergehenden Ansprüche, **dadurch gekennzeichnet, dass** zumindest im Elektronik-Kühlkreislauf (30) ein Temperatursensor (38) vorgesehen ist.

5. Antrieb nach Anspruch 3 und 4, **dadurch gekennzeichnet, dass** der Temperatursensor (38) eine Elektronikkomponente (34) der elektrischen Antriebseinheit (24) ist.

6. Antrieb nach einem der vorhergehenden Ansprüche, **dadurch gekennzeichnet, dass** das erste Kühlmedium (18) flüssig ist.

7. Antrieb nach einem der vorhergehenden Ansprüche, **dadurch gekennzeichnet, dass** das zweite Kühlmedium (28) flüssig ist.

8. Antrieb nach einem der vorhergehenden Ansprüche, **dadurch gekennzeichnet, dass** der Elektronik-Kühlkreislauf (30) mit dem Ladeluft-Kühlkreislauf (22) in Fluidverbindung steht und das erste Kühlmedium (18) mit dem zweiten Kühlmedium (28) identisch ist.

9. Antrieb nach Anspruch 8, **dadurch gekennzeichnet, dass** der Elektronik-Kühlkreislauf (30) und der Ladeluft-Kühlkreislauf (22) einen gemeinsamen Ausgleichsbehälter (40) aufweisen, in dem sich das erste Kühlmedium (18) und das zweite Kühlmedium (28) vermischen.

10. Antrieb nach einem der Ansprüche 1 bis 7, **dadurch gekennzeichnet, dass** das erste Kühlmedium (18) vom zweiten Kühlmedium (28) getrennt ist und die Kühlkreisläufe (22, 30) über einen Wärmetauscher (32) thermisch gekoppelt sind.

## Claims

1. A drive for a hybrid vehicle comprising
an internal combustion engine (12),
a charge cooler (14) for cooling the combustion air supplied to the engine (12),
a cooling-medium cooler (16) for cooling a first cooling medium (18) used for the charge cooler (14),
a first pump (20) for circulating the first cooling medium (18) in a charge cooling circuit (22) comprising the charge cooler (14) and the cooling medium cooler (16),
an electric drive unit (24), and
a second pump (26) for circulating a second cooling medium (28) in an electronic cooling circuit (30) comprising the electric drive unit (24),
wherein the charge cooling circuit (22) and the electronic cooling circuit (30) are thermally coupled, **characterised in that**
the first pump (20) has a variable pumping capacity depending on the requirements in the charge cooling circuit (22) and the requirements in the electronic cooling circuit (30), and
that the second pump (26) during operation has a substantially constant swept volume which satisfies a set volume flow rate minimum requirement in the electronic cooling circuit (30).

2. A drive according to claim 1, **characterised in that** the capacity of the first pump (20) depends on the environmental conditions.

3. A drive according to any of the preceding claims, **characterised in that** the electric drive unit (24) comprises electronic components (34) and a cooling member (36) connected to the electronic cooling circuit (30) for cooling the electronic components (34).

4. A drive according to any of the preceding claims, **characterised in that** a temperature sensor (38) is provided at least in the electronic cooling circuit (30).

5. A drive according to claim 3 and claim 4, **characterised in that** the temperature sensor (38) is an electronic component (34) of the electronic drive unit (24).

6. A drive according to any of the preceding claims, **characterised in that** the first cooling medium (18) is liquid.

7. A drive according to any of the preceding claims, **characterised in that** the second cooling medium (28) is liquid.

8. A drive according to any of the preceding claims, **characterised in that** the electronic cooling circuit (30) is in fluid connection to the charge cooling circuit (22) and the first cooling medium (18) is identical with the second cooling medium (28).

9. A drive according to claim 8, **characterised in that** the electronic cooling circuit (30) and the charge cooling circuit (22) have a common compensating tank (40) in which the first cooling medium (18) and the second cooling medium (28) are mixed.

10. A drive according to any of claims 1 to 7, **characterised in that** the first cooling medium (18) is separate from the second cooling medium (28) and the cooling circuits (22, 30) are thermally coupled via a heat exchanger (32).

## Revendications

1. Entraînement pour véhicule hybride comprenant :
- un moteur thermique (12),
- un radiateur d'air d'alimentation (14) pour refroidir l'air comburant alimentant le moteur thermique (12),
- un radiateur de milieu de refroidissement (16) pour refroidir un premier milieu de refroidissement (18) utilisé pour refroidir le radiateur d'air d'alimentation (14),
- une première pompe (20) pour mettre en circulation le premier milieu de refroidissement (18) dans le circuit de refroidissement d'air d'alimentation (22) formé par le radiateur d'air d'alimentation (14) et le radiateur de fluide de refroidissement (16),
- une première unité d'entraînement électrique (24), et
- une seconde pompe (26) pour mettre en circulation un second milieu de refroidissement (28) dans une unité d'entraînement électrique (24) comportant un circuit de refroidissement de l'électronique (30),
- le circuit de refroidissement de l'air d'alimentation (22) et le circuit de refroidissement de l'électronique (30) étant couplés thermiquement,
entraînement **caractérisé en ce que**
- la première pompe (20) a une puissance de pompage variable dépendant de la demande du circuit de refroidissement de l'air de l'alimentation (22) et de la demande du circuit de refroidissement de l'électronique (30), et
- la seconde pompe (26) a, en fonctionnement, un débit pratiquement constant qui répond à une demande de débit volumique minimum, prédéfinie dans le circuit de refroidissement de l'électronique (30).

2. Entraînement selon la revendication 1,
**caractérisé en ce que**
la puissance de la première pompe (20) dépend des conditions de l'environnement.

3. Entraînement selon l'une des revendications précédentes, **caractérisé en ce que**
l'unité d'entraînement électrique (24) a des composants électroniques (34) ainsi qu'un corps de refroidissement (36) raccordé au circuit de refroidissement de l'électronique (30) pour refroidir les composants électroniques (34).

4. Entraînement selon l'une des revendications précédentes, **caractérisé en ce qu'**
un capteur de température (38) est prévu au moins dans le circuit de refroidissement de l'électronique (30).

5. Entraînement selon les revendications 3 et 4,
**caractérisé en ce que**
le capteur de température (38) est un composant électronique (34) de l'unité d'entraînement électrique (24).

6. Entraînement selon l'une des revendications précédentes, **caractérisé en ce que**
le premier milieu de refroidissement (18) est liquide.

7. Entraînement selon l'une des revendications précédentes, **caractérisé en ce que**
le second milieu de refroidissement (28) est liquide.

8. Entraînement selon l'une des revendications précédentes, **caractérisé en ce que**
le circuit de refroidissement de l'électronique (30) communique par une liaison fluidique avec le circuit de refroidissement de l'alimentation (22) et le premier milieu de refroidissement (18) est identique au second milieu de refroidissement (28).

9. Entraînement selon la revendication 8,
**caractérisé en ce que**
le circuit de refroidissement de l'électronique (30) et le circuit de refroidissement de l'air d'alimentation (22) ont un vase d'expansion (40) commun dans lequel le premier milieu de refroidissement (18) et le second milieu de refroidissement (28) se mélangent.

10. Entraînement selon l'une des revendications 1 à 7,
**caractérisé en ce que**
le premier milieu de refroidissement (18) est séparé du second milieu de refroidissement (28) et les circuits de refroidissement (22, 30) sont couplés thermiquement par un échangeur de chaleur (32).
